# EUROPÄISCHE PATENTSCHRIFT

(11) **EP 4 590 974 B1**
(45) Veröffentlichungstag und Bekanntmachung des Hinweises auf die Patenterteilung: **19.08.2026**
(21) Anmeldenummer: 23764629.4
(22) Anmeldetag: 01.09.2023
(51) Int. Cl.: F16B 13/14

(54) **ANORDNUNG MIT EINER ANKERSTANGE, KOMBINATION DER ANORDNUNG MIT EINEM MAGAZIN UND VERFAHREN ZUR ERSTELLUNG EINER CHEMISCHEN VERANKERUNG**
ARRANGEMENT WITH AN ANCHOR ROD, COMBINATION OF THE ARRANGEMENT WITH A MAGAZINE AND METHOD FOR CREATING A CHEMICAL ANCHORAGE
AGENCEMENT AVEC UNE TIGE D'ANCRE, COMBINAISON DE L'AGENCEMENT AVEC UN MAGASIN ET PROCÉDÉ DE CRÉATION D'UN ANCRAGE CHIMIQUE

(30) Priorität: 20.09.2022 DE 102022124139
(43) Veröffentlichungstag der Anmeldung: 30.07.2025
(73) Patentinhaber: fischerwerke GmbH & Co. KG, 72178 Waldachtal (DE)
(72) Erfinder: TREBER, Dominik, 70199 Stuttgart (DE)
(86) Internationale Anmeldenummer: PCT/EP2023/073996
(87) Internationale Veröffentlichungsnummer: WO 2024/061591

(56) Entgegenhaltungen:
- DE-A1- 19 652 245
- DE-A1- 2 545 417

## Beschreibung

Die Erfindung betrifft eine Anordnung mit einer Ankerstange zur Erstellung einer chemischen Verankerung mit den Merkmalen des Oberbegriffs des Anspruchs 1, eine Kombination der Anordnung mit einem Magazin und ein Verfahren zur Erstellung der chemischen Verankerung mit den Merkmalen des Oberbegriffs des Anspruchs 12.

Mit "chemischer Verankerung" ist hier eine Befestigung der Ankerstange in beispielsweise einem Ankerloch in einem Ankergrund mit einer aushärtenden beziehungsweise ausgehärteten Masse gemeint. Die Masse ist beispielsweise ein Klebstoff, ein Mörtel oder ein Reaktionsharz, das einen Binder und einen Härter aufweist, die nach einem Vermischen abbinden. Derartige chemische Verankerungen sind grundsätzlich bekannt.

Die Ankerstange kann beispielsweise eine Gewindestange oder eine spezielle Ankerstange mit beispielsweise gleichachsig hintereinander angeordneten Kegelstümpfen sein.

Die Patentanmeldung DE 34 11 253 A1 offenbart eine zylinderrohrförmige, an beiden Enden geschlossene Verankerungspatrone aus Glas, in der mehrere Komponenten einer Masse voneinander getrennt enthalten sind. Die Masse härtet nach Mischung ihrer Komponenten aus. Die Verankerungspatrone wird in ein Ankerloch in einem Ankergrund eingebracht und im Ankerloch mit einer Ankerstange zerstört, die nach der Verankerungspatrone in das Ankerloch eingebracht wird. Nach einer Vermischung ihrer Komponenten härtet die Masse aus und verankert die Ankerstange im Ankerloch.

Das Gebrauchsmuster DE 75 18 335 U offenbart eine Ankerstange mit einem Flansch und zwei zylindrischen Umhüllungen, die die Ankerstange und einander umschließen und die zwei Komponenten einer Masse voneinander getrennt enthalten. Die Masse härtet nach einer Vermischung ihrer Komponenten aus. Zur Erstellung einer chemischen Verankerung wird die Ankerstange so an einem Ankerloch angesetzt, dass eine Austrittsdüse einer äußeren der beiden Umhüllungen in das Ankerloch ragt. Durch Verschieben der Ankerstange drückt deren Flansch die beiden Komponenten der Masse aus den Umhüllungen der Ankerstange durch die Austrittsdüse in das Ankerloch, wo die beiden Komponenten der Masse die Ankerstange umschließen und nach einem Vermischen aushärten und die Ankerstange im Ankerloch verankern. Die beiden Umhüllungen werden beim Ausdrücken der in ihnen enthaltenen Komponenten zerstört, verbleiben außerhalb des Ankerlochs und müssen zusammen mit der Austrittsdüse entfernt werden.

Weitere Anordnungen mit einer Ankerstange sind aus DE 25 45 417 A1 und aus DE 196 52 245 A1 bekannt.

Aufgabe der Erfindung ist, eine Anordnung mit einer Ankerstange, einer Verankerungspatrone, die eine Verankerungsmasse enthält, und einem Verbindungselement vorzuschlagen, die die Erstellung einer chemischen Verankerung vereinfacht. Eine weitere Aufgabe der Erfindung ist, ein Verfahren zur Erstellung der chemischen Verankerung mit der erfindungsgemäßen Anordnung vorzuschlagen.

Diese Aufgabe wird erfindungsgemäß durch die Merkmale der Ansprüche 1 und 11 gelöst.

Die erfindungsgemäße Anordnung weist eine Ankerstange, eine Verankerungspatrone und ein Verbindungselement, welches die Verankerungspatrone mit der Ankerstange verbindet, auf.

Die Ankerstange kann beispielsweise eine Gewindestange oder eine spezielle Ankerstange mit beispielsweise mehreren, gleichachsig und mit gleicher Orientierung hintereinander angeordneten Hohlkegelstümpfen sein.

Die Verankerungspatrone ist ein Behältnis, das eine Verankerungsmasse enthält, die nach einer Zerstörung der Verankerungspatrone aushärtet. Vor ihrer Zerstörung verhindert die Verankerungspatrone das Aushärten der Verankerungsmasse. Die Verankerungsmasse kann aus einer Komponente oder aus mehreren Komponenten bestehen, die getrennt voneinander, beispielsweise in jeweils eigenen Behältnissen, in der Verankerungspatrone enthalten sind. Die Verankerungspatrone kann beispielsweise ein beidseitig geschlossenes Kunststoff- oder Glasrohr oder ein Schlauchfolienbeutel sein. Die Aufzählung ist beispielhaft und nicht abschließend.

Die erfindungsgemäße Anordnung dient zur Erstellung einer chemischen Verankerung in einem Ankerloch in einem Ankergrund. Beispielsweise ist das Ankerloch ein Bohrloch, das in eine Wand oder Decke aus Beton oder Mauerwerk als Ankergrund gebohrt wurde.

Zur Erstellung der chemischen Verankerung in beispielsweise einem Ankerloch in einem Ankergrund wird die Verankerungspatrone, die mit dem Verbindungselement mit der Ankerstange verbunden ist, in das Ankerloch eingebracht und mit der Ankerstange im Ankerloch zerstört. Dabei wird die Anordnung an der Ankerstange von Hand oder maschinell gehalten beziehungsweise gehandhabt. Beim Einbringen der Ankerstange in das Ankerloch zerstört die Ankerstange nicht nur die Verankerungspatrone, sondern verdrängt nach Art eines Kolbens die Masse beziehungsweise die Komponenten der Masse von einem Lochgrund zu einer Lochmündung, wobei die Masse einen die Ankerstange im Ankerloch umgebenden Ringraum ausfüllt. Durch eine Drehung der Ankerstange beim und/oder nach dem Einbringen in das Ankerloch wird die Masse in einer Umfangsrichtung um die Ankerstange herum verteilt und die Komponenten der Masse werden gemischt, sofern die Masse mehrere Komponenten aufweist. Die zuvor in der Verankerungspatrone enthaltene Masse härtet nach der Zerstörung der Verankerungspatrone und gegebenenfalls nach einer Mischung ihrer Komponenten im Ankerloch aus und verankert die Ankerstange im Ankerloch im Ankergrund. Diese Verankerung der Ankerstange mit der dann ausgehärteten Masse im Ankerloch wird auch als chemische Verankerung bezeichnet.

Das Verbindungselement weist eine erste Aufnahme, in der die Verankerungspatrone gehalten ist, und eine zweite Aufnahme, in der die Ankerstange gehalten ist, auf. Vorzugsweise halten die Aufnahmen die Verankerungspatrone und die Ankerstange klemmend und/oder gleichachsig zueinander. Das heißt, das Verbindungselement hält die Verankerungspatrone in axialer Verlängerung der Ankerstange an der Ankerstange. Insbesondere für eine Gewindestange als Ankerstange ist auch eine Verrastung der Ankerstange in der zweiten Aufnahme des Verbindungselements möglich.

Das Verbindungselement beziehungsweise die erfindungsgemäße Anordnung vereinfachen die Erstellung der chemischen Verankerung, weil durch die Verbindung der Verankerungspatrone mit der Ankerstange die Verankerungspatrone mit Hilfe der Ankerstange in das Ankerloch eingebracht werden kann.

Eine Ausgestaltung der Erfindung sieht zwei Klemmelemente vor, die bezüglich der Verankerungspatrone und/oder der Ankerstange einander gegenüber angeordnet sind, so dass sie, bezogen auf eine Längsachse, die parallel zu einer Einführrichtung der Verankerungspatrone in ein Ankerloch verläuft, sich radial zu dieser Längsachse an sich gegenüberliegenden Seiten der Verankerungspatrone und/oder der Gewindestange anliegen. Alternativ können mehrere Klemmelemente um die Verankerungspatrone und um die Ankerstange herum angeordnet sein, also um die Längsachse herum, zwischen denen, insbesondere zwischen Enden der Klemmelemente, die Verankerungspatrone und die Ankerstange angeordnet und festgeklemmt sind. Zum Festklemmen der Verankerungspatrone und der Ankerstange zwischen den Klemmelementen sind die Klemmelemente gegeneinander derart beweglich, dass ihr Abstand voneinander veränderbar ist, sie also radial zur Längsachse zueinander beweglich sind. Zum Festklemmen der Verankerungspatrone und der Ankerstange werden die Klemmelemente - beispielsweise durch Federbeaufschlagung oder in anderer Weise - aufeinander zu beaufschlagt derart, dass sich ihr Abstand voneinander verkleinert, beziehungsweise dass die Klemmelemente die Verankerungspatrone und die Ankerstange zwischen sich festklemmen und dadurch miteinander verbinden.

Eine Ausgestaltung der Erfindung sieht vor, dass das Verbindungselement zangenartig ausgebildet ist, derart, dass eine Aufweitung der ersten Aufnahme die zweite Aufnahme verengt und umgekehrt. Weitet die Ankerstange, die in der zweiten Aufnahme des Verbindungselements gehalten ist, die zweite Aufnahme auf, verengt sie dadurch zugleich die erste Aufnahme des Verbindungselements, in der die Verankerungspatrone gehalten ist, wodurch ein Halt der Verankerungspatrone in der ersten Aufnahme des Verbindungselements verbessert ist.

Eine Ausgestaltung der Erfindung sieht vor, dass das Verbindungselement zwei Klemmwippen, die einander gegenüber angeordnet sind, oder mehrere Klemmwippen, die über einen Umfang des Verbindungselements verteilt angeordnet sind, aufweist, wobei sich "Umfang" ebenfalls auf die oben beschriebene Längsachse bezieht, die parallel zur Einführrichtung verläuft. Die Klemmwippen sind auf gegenüberliegenden Seiten der Verankerungspatrone und der Ankerstange beziehungsweise in Umfangsrichtung um die Verankerungspatrone und die Ankerstange herum angeordnet. Die Klemmwippen erstrecken sich in einer Längsrichtung, insbesondere parallel zur Längsachse, und über Teilumfänge des Verbindungselements. Längsabschnitte der Klemmwippen an den Enden der Klemmwippen bilden die erste Aufnahme und Längsabschnitte an den gegenüberliegenden Enden der Klemmwippen bilden die zweite Aufnahme des Verbindungselements. Zwischen den einen Enden der Klemmwippen steckt die Verankerungspatrone und zwischen den anderen Enden der Klemmwippen steckt die Ankerstange. Die Klemmwippen sind gegeneinander schwenkbar derart, dass die einen Enden der Klemmwippen zusammengedrückt werden, wenn die gegenüberliegenden anderen Enden der Klemmwippen auseinandergedrückt werden. Dadurch drückt die Ankerstange, deren eines Ende zwischen den anderen Enden der Klemmwippen des Verbindungselements steckt, die gegenüberliegenden Enden der Klemmwippen des Verbindungselements zusammen, wodurch die Verankerungspatrone zwischen den einen Enden der Klemmwippen festgeklemmt ist beziehungsweise die Klemmung verstärkt wird.

Die Klemmwippen sind beispielsweise rohrschalenförmig und beispielsweise in einem mittleren Längsabschnitt mit Abstand von beiden Enden der Klemmwippen um beispielsweise eine radiale Achse oder um tangentiale Achsen des Verbindungselements derart schwenkbar, dass sich die einen Enden der Klemmwippen einander nähern, wenn die gegenüberliegenden anderen Enden der Klemmwippen auseinander bewegt werden.

Eine Weiterbildung der Erfindung sieht vor, dass die Klemmelemente oder Klemmwippen des Verbindungselements der erfindungsgemäßen Anordnung über Solltrennstellen miteinander verbunden sind. Die Klemmelemente oder Klemmwippen lassen sich voneinander trennen, indem sie so stark radial zur Längsachse auseinander beaufschlagt werden, dass eine oder mehrere Solltrennstellen zerstört werden. Auf diese Weise lassen sich die Klemmelemente oder Klemmwippen vollständig oder zumindest lokal an einer Umfangsstelle voneinander trennen, so dass sie von der Verankerungspatrone und der Ankerstange entfernt werden können. Auf diese Weise lässt sich das Verbindungselement während oder nach der Erstellung der chemischen Verankerung von der Verankerungspatrone und der Ankerstange entfernen.

Eine Weiterbildung der Erfindung sieht vor, dass die Solltrennstellen die Klemmelemente oder Klemmwippen schwenkbar miteinander verbinden.

Eine Ausgestaltung der Erfindung sieht ein inneres axiales Widerlager für die Ankerstange in dem Verbindungselement vor, das eine Axialkraft von der Ankerstange auf das Verbindungselement überträgt. Wird die Ankerstange mit einer ausreichend hohen Axialkraft beaufschlagt, überwindet und durchdringt sie das innere Widerlager im Verbindungselement und zerstört im Weiteren die Verankerungspatrone, wenn sich die Verankerungspatrone in einem Ankerloch befindet und von einem Lochgrund gegengehalten wird. Vorzugsweise zerstört die Ankerstange, wenn sie das innere axiale Widerlager überwindet, das Verbindungselement derart, dass sich die Verankerungspatrone aus der ersten Aufnahme des Verbindungselements und vorzugsweise auch die Ankerstange aus der zweiten Aufnahme des Verbindungselements löst. Das Verbindungselement bleibt außerhalb des Ankergrunds und bleibt dort auf der Ankerstange hängen oder fällt herunter.

Eine Ausgestaltung der Erfindung sieht Stützfüße am Verbindungselement zu einem axialen Abstützen des Verbindungselements radial außerhalb einer Mündung des Ankerlochs an einem Ankergrund vor. Radial zum Verbindungselement stehen die Stützfüße über eine axiale Projektion der ersten Aufnahme des Verbindungselements nach außen über. In der ersten Aufnahme ist die Verankerungspatrone gehalten, die Stützfüße des Verbindungselements befinden sich radial außerhalb eines Umfangs der Verankerungspatrone. In der Längsrichtung des Verbindungselements stehen die Stützfüße über die erste Aufnahme derart über, dass die Stützfüße des Verbindungselements außerhalb der Mündung des Ankerlochs gegen den Ankergrund stoßen, wenn die in der ersten Aufnahme des Verbindungselements gehaltene Verankerungspatrone in das Ankerloch eingebracht wird. Die Stützfüße halten das Verbindungselement beim Einbringen der Verankerungspatrone in das Ankerloch außerhalb des Ankergrunds.

Wird eine Axialkraft in Richtung des Ankerlochs auf das Verbindungselement ausgeübt, erzeugen die Stützfüße, die das Verbindungselement außerhalb der Mündung des Ankerlochs am Ankergrund abstützen, ein Moment beziehungsweise Momente, die die erste Aufnahme des Verbindungselements aufweiten. Der Halt der Verankerungspatrone im Verbindungselement lockert oder löst sich. Außerdem können die Momente, welche die sich am Ankergrund gegen die Axialkraft abstützenden Stützfüße erzeugen, das Verbindungselement zerstören, insbesondere an mindestens einer der Solltrennstellen, und die Klemmelemente oder Klemmwippen dadurch voneinander trennen.

Eine Ausgestaltung der Erfindung sieht ein äußeres axiales Widerlager des Verbindungselements vor, das sich in der Längsrichtung des Verbindungselements gesehen im Bereich der zweiten Aufnahme oder an dem Ende des Verbindungselements mit der zweiten Aufnahme befindet, in der die Ankerstange gehalten ist. Das äußere Widerlager dient einer Magazinierung der Anordnung, es begrenzt eine Einstecktiefe der Anordnung in eine Aufnahme eines Magazins für mehrere erfindungsgemäße Anordnungen. Die Aufnahmen des Magazins für die erfindungsgemäßen Anordnungen können parallel zueinander in einer gemeinsamen Ebene, in einem Raster oder auf einer Zylinderfläche angeordnet sein. Die Aufzählung ist beispielhaft und nicht abschließend. Die Ankerstangen stehen aus dem Magazin derart vor, dass die Anordnungen manuell oder automatisch an den Ankerstangen ergriffen und aus dem Magazin gezogen werden können.

Zur Erstellung der chemischen Verankerung sieht das erfindungsgemäße Verfahren mit den Merkmalen des Anspruchs 11 vor, die Verankerungspatrone in der ersten Aufnahme und die Ankerstange in der zweiten Aufnahme des Verbindungselements derart anzuordnen, dass die Verankerungspatrone über das Verbindungselement mit der Ankerstange verbunden ist. Insbesondere befinden sich die Aufnahmen einander derart gegenüber, dass die Verankerungspatrone in axialer Verlängerung der Ankerstange gehalten ist. Die Anordnung mit der Verankerungspatrone, dem Verbindungselement und der Ankerstange wird an der Ankerstange gehalten und mit der Verankerungspatrone voraus in ein Ankerloch in einem Ankergrund eingebracht. Die Ankerstange kann maschinell gehalten und bewegt werden, beispielsweise kann sie in ein Spannfutter oder eine Aufnahme eines Akkuschraubers oder einer (Hand-) Bohrmaschine eingespannt sein. Die Ankerstange wird durch das Verbindungselement und durch deren erste Aufnahme hindurch in das Ankerloch eingebracht und zerstört die Verankerungspatrone im Ankerloch.

Das Verbindungselement stößt vorzugsweise seitlich außerhalb einer Mündung des Ankerlochs am Ankergrund an und gelangt nicht in das Ankerloch, sondern verbleibt außerhalb des Ankergrundes. Insbesondere weist das Verbindungselement Stützfüße radial außerhalb seiner ersten Aufnahme auf, die sich beim Einbringen der Verankerungspatrone in das Ankerloch außerhalb einer Mündung des Ankerlochs am Ankergrund abstützen und das Verbindungselement außerhalb des Ankergrundes halten. Das Verbindungselement wird vorzugsweise von der Ankerstange zerstört, wenn die Ankerstange das Verbindungselement durchdringt, und bleibt außerhalb des Ankergrundes lose auf der Ankerstange hängen oder löst sich von der Ankerstange. Vorzugsweise wird die Ankerstange so tief in das Ankerloch eingebracht, dass sie die Verankerungspatrone zerstört und die Verankerungsmasse aus der Verankerungspatrone im Ankerloch derart verdrängt, dass die Verankerungsmasse in einem die Ankerstange im Ankerloch umgebenden Ringspalt in Richtung der Mündung des Ankerlochs fließt. Die Ankerstange wird vorzugsweise so tief in das Ankerloch eingebracht, dass die Verankerungsmasse den Ringspalt, der die Ankerstange im Ankerloch umgibt, vollständig bis zur Mündung des Ankerlochs ausfüllt. Um die Ankermasse in einer Umfangsrichtung um die Ankerstange herum zu verteilen, kann die Ankerstange gedreht beziehungsweise drehend angetrieben werden. Eine Drehung der Ankerstange bewirkt auch eine Mischung von Komponenten der Verankerungsmasse, wenn die Verankerungsmasse mehrere Komponenten aufweist.

Nach der Zerstörung der Verankerungspatrone härtet die Verankerungsmasse aus und verankert die Ankerstange im Ankerloch. Vorzugsweise steht die Ankerstange aus dem Ankerloch vor, um etwas an ihr befestigen zu können.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels gegebenenfalls in Kombination mit einem, mehreren oder allen Merkmalen des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: eine erfindungsgemäße Anordnung in einer perspektivischen Darstellung;
- Figur 2: eine Einzelheit der Anordnung aus Figur 1 gemäß Pfeil II in Figur 1;
- Figur 3: ein Verbindungselement der Anordnung aus Figur 1 als Einzelteil in einer perspektivischen Darstellung;
- Figur 4: einen Achsschnitt des Verbindungselements aus Figur 3; und
- Figur 5: ein Magazin mit mehreren Anordnungen gemäß Figur 1 gemäß der Erfindung.

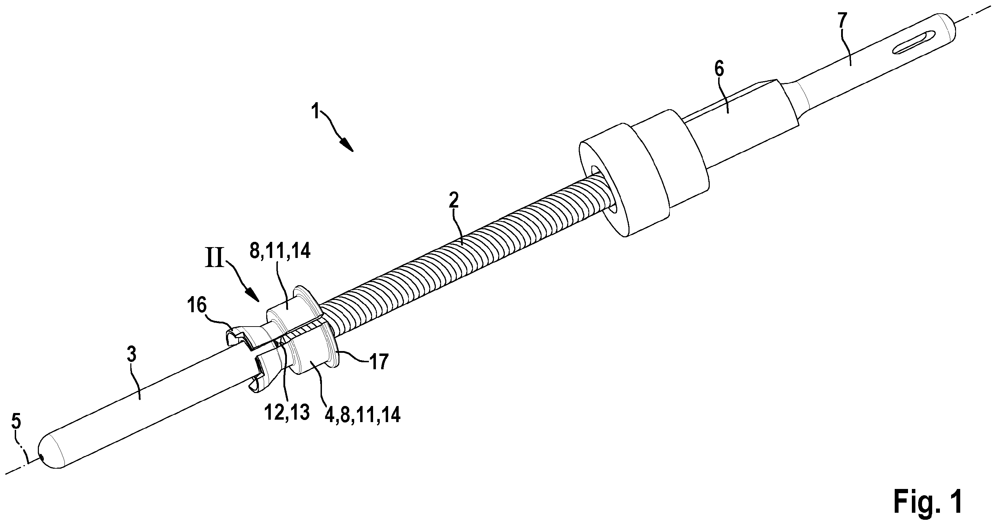

Die in Figur 1 dargestellte, erfindungsgemäße Anordnung 1 weist eine Ankerstange 2, eine Verankerungspatrone 3 und ein Verbindungselement 4 auf, das die Verankerungspatrone 3 mit der Ankerstange 2 verbindet. Die Anordnung 1 ist zu einer Erstellung einer sogenannten chemischen Verankerung vorgesehen. "Chemischen Verankerung" bedeutet eine Verankerung beziehungsweise Befestigung der Ankerstange 2 in einem nicht dargestellten Ankerloch in einem Ankergrund aus beispielsweise Mauerwerk, Beton oder Stein mithilfe einer ausgehärteten Verankerungsmasse. Die Verankerungsmasse kann beispielsweise ein Ein- oder Mehrkomponenten Kleber, Kunstharz oder Mörtel sein, die nach einer Zerstörung der Verankerungspatrone und gegebenenfalls Mischung ihrer Komponenten aushärtet.

Im Ausführungsbeispiel ist die Ankerstange 2 eine Gewindestange mit metrischem Gewinde. Es können allerdings auch andere beziehungsweise spezielle Ankerstangen mit beispielsweise koaxial hintereinander und gleich orientiert angeordneten Kegelstümpfen verwendet werden.

In Figur 1 ist ein dem Verbindungselement 4 fernes Ende der Ankerstange 2 in ein Setzwerkzeug 6 eingespannt, das einen Schaft 7 zum Einspannen in ein nicht dargestelltes Schnellspannfutter eines Akkuschraubers, einer Bohrmaschine, einer Schlagbohrmaschine oder eines Bohrhammers zu einem Drehantrieb der Ankerstange 2 beziehungsweise der gesamten Anordnung 1 aufweist. Das Setzwerkzeug 6 ist kein Teil der erfindungsgemäßen Anordnung 1.

Die Verankerungspatrone 3 ist im Ausführungsbeispiel zylinderrohrförmig, an beiden Enden geschlossen und lässt sich mit der Ankerstange 2 in dem Ankerloch zerstören. Im Ausführungsbeispiel ist die Verankerungspatrone 3 eine Glaspatrone, die die Verankerungsmasse hermetisch dicht enthält. In der unzerstörten Verankerungspatrone 3 ist die Verankerungsmasse in fließfähigem Zustand enthalten. Sie kann beispielsweise flüssig, zähfließend oder pastös sein. Auch eine beispielsweise pulverförmige Komponente ist möglich. Nach einer Zerstörung der Verankerungspatrone 3 härtet die Verankerungsmasse aus. Die Verankerungsmasse kann eine Komponente oder mehrere Komponenten aufweisen, von denen eine Komponente in der Verankerungspatrone 3 und eine oder mehrere weitere Komponenten in eigenen Patronen oder anderen Behältnissen in der einen Komponente in der Verankerungspatrone 3 getrennt von der einen Komponente enthalten sind. Die weitere/n Patronen oder Behältnisse werden beim Zerstören der Verankerungspatrone 3 im Ankerloch ebenfalls mit der Ankerstange 2 zerstört, woraufhin die Verankerungsmasse aushärtet, wenn ihre Komponenten gemischt werden. Weist die Verankerungsmasse nur eine Komponente auf, härtet sie nach Zerstörung der Verankerungspatrone 3 aus.

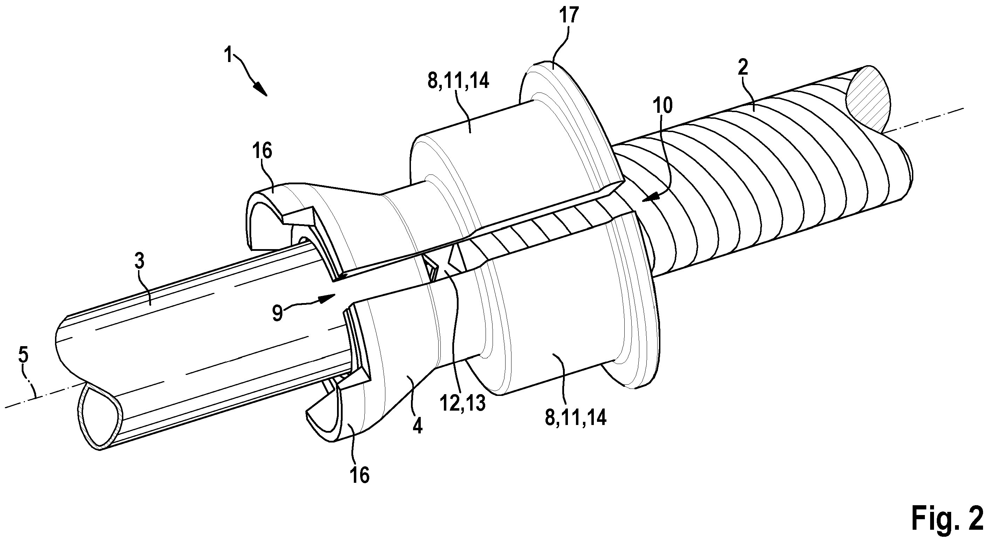

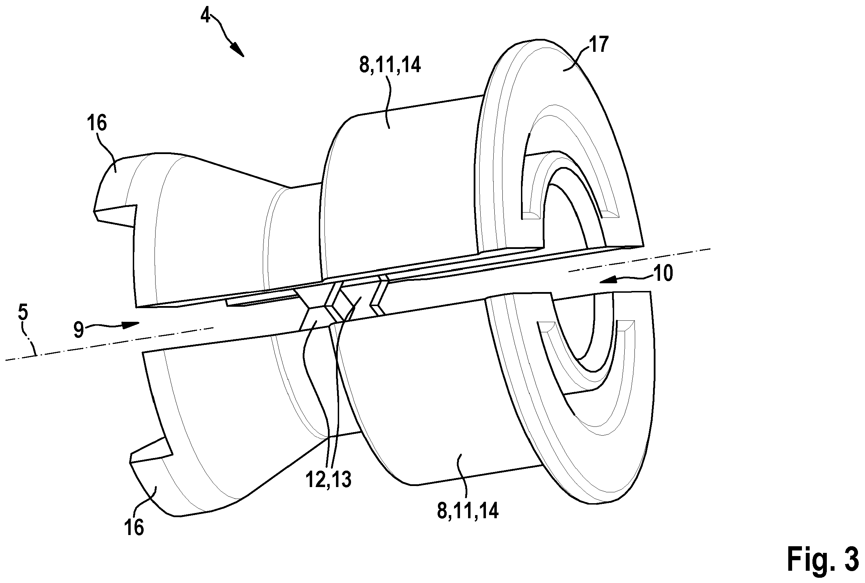

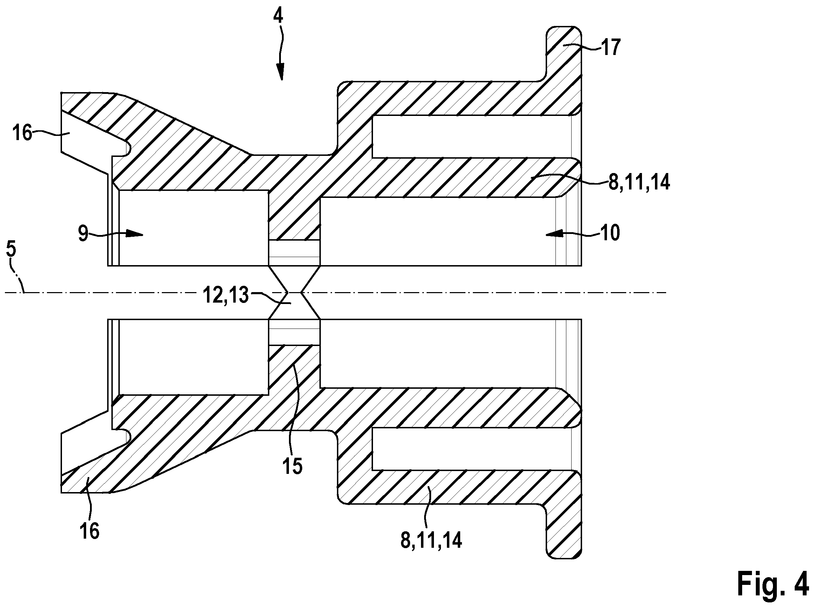

Das Verbindungselement 4 weist die Form einer längs in einer axialen Teilungsebene geteilten Muffe auf. Sie ist vergrößert in Figur 2, als Einzelteil in Figur 3 und in einem Achsschnitt in Figur 4 zu sehen. Das Verbindungselement 4 weist zwei gleiche Halbrohre 8 auf, die einander bezüglich der axialen Teilungsebene des Verbindungselements 4 spiegelbildlich gegenüber angeordnet sind. Anstelle von zwei Halbrohren 8 sind auch mehr als zwei Teilrohre oder beispielsweise auch biegesteife Streifen möglich, die über einen Umfang verteilt angeordnet sind (nicht dargestellt). Diese Teilrohre oder Streifen bilden einen rohrförmigen, in einer Längsrichtung zwischen den Teilrohren oder Streifen unterbrochenen Körper. Die Teilrohre oder Streifen sind zum Festklemmen der Verankerungspatrone 3 und der Ankerstange 2 zwischen ihren Enden radial zueinander beweglich und um Tangentialachsen schwenkbar.

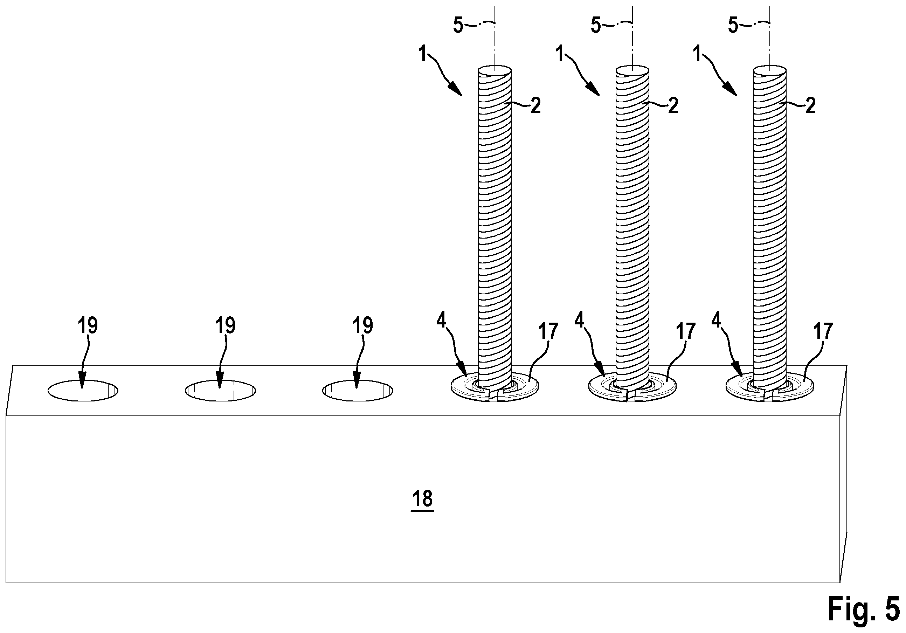

Das Verbindungselement 4 weist in einem Stirnende eine erste Aufnahme 9, in der die Verankerungspatrone 3 gehalten ist, und in einem gegenüberliegenden Stirnende eine zweite Aufnahme 10 auf, in der die Ankerstange 2 gehalten ist. Die beiden Aufnahmen 9, 10 sind, bezogen auf eine Längsachse 5, gleichachsig angeordnet und halten die Verankerungspatrone 3 und die Ankerstange 2 gleichachsig zur Längsachse 5, so dass sie Richtung der Längsachse 5, die parallel zu einer Einführrichtung der Verankerungspatrone 3 in ein Bohrloch verläuft (vgl. Figur 5), hintereinander angeordnet sind. Das heißt, das Verbindungselement 4 hält die Verankerungspatrone 3 in axialer Verlängerung der Ankerstange 2.

Die beiden Aufnahmen 9, 10 werden durch koaxiale Ausnehmungen gebildet, die einander bezüglich der axialen Teilungsebene des Verbindungselements 4 paarweise gegenüber in jeweils beiden Stirnenden der Halbrohre 8 des Verbindungselements 4 ausgebildet sind. Die Längsachse 5 liegt mittig zwischen den Halbrohren 8. Im Ausführungsbeispiel sind die Ausnehmungen, die die beiden Aufnahmen 9, 10 bilden, halbzylinderförmig. Anstelle (halb-) zylinderrohrförmiger Ausnehmungen können die Halbrohre 8 des Verbindungselements 4 andere, beispielsweise im Querschnitt V-förmige oder trapezförmige Ausnehmungen einander paarweise gegenüber in den beiden Stirnenden der beiden Halbrohre 8 als Aufnahmen 9, 10 für die Verankerungspatrone 3 und die Ankerstange 2 aufweisen (nicht dargestellt).

Die Halbrohre 8 und die die beiden Aufnahmen 9, 10 bildenden Ausnehmungen erstrecken sich jeweils über etwas weniger als 180° in der Umfangsrichtung derart, dass ein Spalt in der axialen Teilungsebene des Verbindungselements 4 zwischen dessen beiden Halbrohren 8 besteht, der ein radiales Zusammenspannen der Halbrohre 8 zum Einspannen der Verankerungspatrone 3 in der ersten Aufnahme 9 und der Ankerstange 2 in der zweiten Aufnahme 10 des Verbindungselements 4 ermöglicht. Die Halbrohre 8 können auch als bezüglich der Längsachse 5 radial zueinander bewegliche Klemmelemente 11 aufgefasst werden, die die Verankerungspatrone 3 und die Ankerstange 2 in den Aufnahmen 9, 10 an jeweils einem ihrer Stirnenden festklemmen.

Die beiden Aufnahmen 9, 10 weisen in Richtung der Längsachse 5 einen axialen Abstand voneinander auf, wie dies in Figur 4 zu sehen ist. In einem Bereich zwischen den beiden Aufnahmen 9, 10 sind die beiden Halbrohre 8 des Verbindungselements 4 an ihren Umfängen mit Solltrennstellen 12 verbunden. Im Ausführungsbeispiel werden die Solltrennstellen 12 durch in Umfangsrichtung zwischen den Halbrohren 8 verlaufende Stege mit V-förmige Schwächungen gebildet. Im Ausführungsbeispiel ist das Verbindungselement 4 in einem Stück aus Kunststoff spritzgegossen, wobei die beiden Halbrohre 8 einstückig über die beiden in der axialen Trennebene einander gegenüber angeordneten Solltrennstellen 12 einstückig miteinander verbunden sind. Indem die beiden Halbrohre 8 radial auseinandergedrückt werden, lassen sich die Solltrennstellen 12 zerstören und die Halbrohre 8 voneinander trennen.

Eine andere, auch mehrteilige Herstellung des Verbindungselements 4 und/oder eine Herstellung des Verbindungselements 4 aus einem anderen Material als Kunststoff oder aus verschiedenen Materialien schließt die Erfindung nicht aus.

Die Solltrennstellen 12 bilden zugleich auch Gelenke 13, die die beiden Halbrohre 8 des Verbindungselements 4 um eine radiale, in der axialen Trennebene des Verbindungselements 4 liegende Schwenkachse schwenkbar miteinander verbinden. Auf diese Weise ist das Verbindungselement 4 zangenartig ausgebildet derart, dass eine Aufweitung der ersten Aufnahme 9 die zweite Aufnahme 10 verengt und umgekehrt. Werden die Halbrohre 8 an einem Stirnende auseinandergedrückt, schwenken ihre gegenüberliegenden Stirnenden zusammen.

Die beiden Aufnahmen 9, 10 weisen ein Untermaß in Bezug auf die Verankerungspatrone 3 und die Ankerstange 2 auf. Das heißt, ein bezüglich der Längsachse 5 radialer Abstand beziehungsweise eine lichte Weite der Aufnahmen 9, 10 senkrecht zur axialen Teilungsebene des Verbindungselements 4 ist etwas kleiner als ein Durchmesser der Verankerungspatrone 3 beziehungsweise der Ankerstange 2. Deswegen drückt die Ankerstange 2 die beiden Halbrohre 8 in der zweiten Aufnahme 10 radial auseinander, wodurch die gegenüberliegenden Stirnenden der beiden Halbrohre 8 radial zusammen und von außen gegen die Verankerungspatrone 3 gedrückt werden, wodurch die Verankerungspatrone 3 in der ersten Aufnahme 9 festgeklemmt oder fester festgeklemmt wird. Die Solltrennstellen 12 sind in Umfangsrichtung elastisch dehnbar, so dass die Verankerungspatrone 3 und die Ankerstange 2 trotz des jeweiligen Untermaßes zeitgleich in den Aufnahmen 9, 10 aufgenommen werden können. Die Ankerstange 2 und die Verankerungspatrone 3 sind somit beide zeitgleich in den Aufnahmen 9, 10 klemmend gehalten und somit miteinander verbunden.

Die beiden Halbrohre 8 des Verbindungselements 4 können auch als rohrschalenförmige Klemmwippen 14 aufgefasst werden, die sich in einer Längsrichtung des Verbindungselements 4, also in Richtung der Längsachse 5 erstrecken. Die Klemmwippen 14 sind einander in Bezug auf die axiale Teilungsebene des Verbindungselements 4 gegenüber angeordnet und um die radiale, in der Teilungsebene liegende Schwenkachse der beiden Gelenke 13 gegeneinander schwenkbar. Indem die Ankerstange 2 in der zweiten Aufnahme 10 die Klemmwippen 14 bildenden Halbrohre 8 an ihren einen Stirnenden radial auseinander drückt, drückt sie die gegenüberliegenden Stirnenden der die Klemmwippen 14 bildenden Halbrohre 8 radial zusammen und klemmt dadurch die Verankerungspatrone 3 in der ersten Aufnahme 9 im gegenüberliegenden Stirnende des Verbindungselements 4 fest oder fester.

In dem Bereich zwischen den beiden Aufnahmen 9, 10 weisen die Halbrohre 8 des Verbindungselements 4 halbkreisringförmige Rippen in ihrem Inneren als inneres axiales Widerlager 15 für die Ankerstange 2 auf. Die beiden halbkreisringförmigen Rippen in den beiden Halbrohren 8 des Verbindungselements 4, die das innere axiale Widerlager 15 bildenden, sind gut im Achsschnitt der Figur 4 zu sehen. Das innere Widerlager 15 überträgt eine Axialkraft von der Ankerstange 2 über das Verbindungselement 4 auf die Verankerungspatrone 3. Wird die Ankerstange 2 mit einer ausreichend hohen Axialkraft durch das innere Widerlager 15 durchgeschoben, schiebt sie die Verankerungspatrone 3 axial aus der ersten Aufnahme 9 des Verbindungselements 4 heraus und/oder zerstört die Ankerstange 2 die Verankerungspatrone 3, wenn die Verankerungspatrone 3 axial gegengehalten wird, weil sie beispielsweise an einem Lochgrund des nicht dargestellten Ankerlochs aufsitzt.

Bei einem axialen Durchdringen des inneren axialen Widerlagers 15 drückt die Ankerstange 2 im inneren Widerlager 15 die beiden Halbrohre 8 radial auseinander, wodurch beide oder mindestens eine Solltrennstelle 12 zerstört wird. Die beiden Halbrohre 8 sind dann voneinander getrennt oder nur noch an einer Solltrennstelle 12 miteinander verbunden.

Das Verbindungselement 4 weist - im Ausführungsbeispiel zwei - Stützfüße 16 an einem vorderen Ende auf, wobei als vorderes Ende das die erste Aufnahme 9 aufweisende Stirnende des Verbindungselements 4 bezeichnet wird, in dem die Verankerungspatrone 3 angeordnet beziehungsweise festgeklemmt ist. Die Stützfüße 16 stützen das Verbindungselement 4 radial außerhalb einer axialen Projektion der ersten Aufnahme 9 des Verbindungselements 4 axial an dem nicht dargestellten Ankergrund ab. Beim Einbringen der Verankerungspatrone 3 in das Ankerloch in dem nicht dargestellten Ankergrund sitzen die Stützfüße 16 des Verbindungselements 4 radial außerhalb einer Mündung des Ankerlochs auf dem Ankergrund auf und verhindern, dass das Verbindungselement 4 in das Ankerloch gelangt.

Weil die Stützfüße 16 radial außerhalb der Mündung des Ankerlochs auf dem Ankergrund aufsitzen, erzeugen sie zusammen mit der Ankerstange 2, wenn diese axial gegen das innere axiale Widerlager 15 drückt, ein Moment, das die beiden die Klemmwippen 14 bildenden Halbrohre 8 des Verbindungselements 4 an der ersten Aufnahme 9 auseinander beaufschlagt, wodurch die Klemmung der Verankerungspatrone 3 in der ersten Aufnahme 9 gelockert wird.

Wie in Figur 4 zu sehen ist, weisen die beiden Halbrohre 8 des Verbindungselements 4 hohlkegelstumpfförmige Vorsprünge an ihren Außenseiten auf, die im Bereich der ersten Aufnahme 9 schräg nach außen und nach vorn abstehen. Diese Vorsprünge bilden Stützfüße 16 des Verbindungselements 4. Im Ausführungsbeispiel erstrecken sich die beiden Stützfüße 16 symmetrisch zur axialen Trennungsebene beziehungsweise zu Längsachse 5 des Verbindungselements 4 jeweils über etwa 90° in der Umfangsrichtung.

Zu einer in Figur 5 dargestellten Magazinierung weist das Verbindungselement 4 ein äußeres axiales Widerlager 17 auf, das im Ausführungsbeispiel als lochscheibenförmiger, radial nach außen überstehender Flansch an dem Stirnende des Verbindungselements 4 ausgebildet ist, das die zweite Aufnahme 10 aufweist, in der die Ankerstange 2 gehalten ist.

Das Magazin 18 in Figur 5 weist zueinander parallele Löcher als Aufnahmen 19 auf, in die die Verankerungspatronen 3 und die Verbindungselemente 4 mehrerer erfindungsgemäßer Anordnungen 1 bis zu einem Aufsitzen der äußeren Widerlager 17 der Verbindungselemente 4 auf dem Magazin 18 gesteckt sind. Die Ankerstangen 2 stehen aus dem Magazin 17 vor derart, dass die Anordnungen 1 gut an den Ankerstangen 2 gegriffen beziehungsweise das Schnellspannfutter 6 auf die Ankerstangen 2 aufgesetzt und die Anordnungen 1 aus ihren Aufnahmen 19 im Magazin 18 herausgezogen werden können.

Zur Erstellung einer nicht dargestellten chemischen Verankerung der Ankerstange 2 mit Hilfe der erfindungsgemäßen Anordnung 1 wird erfindungsgemäß die Anordnung 1 an der Ankerstange 2 ergriffen beziehungsweise in das Setzwerkzeug 6 eingespannt und mit der Verankerungspatrone 3 voraus in das nicht dargestellte Ankerloch im Ankergrund eingebracht. Dabei sitzen die Stützfüße 16 des Verbindungselements 4 radial außerhalb der Mündung des Ankerlochs auf dem Ankergrund auf und halten das Verbindungselement 4 außerhalb des Ankergrundes.

Die Ankerstange 2 wird weiter axial in das Ankerloch eingebracht, wobei sie das innere Widerlager 15 im Verbindungselement 4 durchdringt und die Verankerungspatrone 3 im Ankerloch axial aus der ersten Aufnahme 9 des Verbindungselements 4 herausschiebt. Sitzt die Verankerungspatrone 3 an einem Lochgrund des Ankerlochs auf, zerstört die Ankerstange 2 die Verankerungspatrone 3 und zerstört auch - sofern vorhanden - weitere Patronen oder Behältnisse, welche die Komponenten der Verankerungsmasse in der Verankerungspatrone 3 voneinander getrennt enthalten.

Durch die axiale Bewegung der Ankerstange 2 in das Ankerloch hinein verdrängt die Ankerstange 2 die Verankerungsmasse aus der zerstörten Verankerungspatrone 3 vom Lochgrund des Ankerlochs zur Mündung des Ankerlochs, wobei die Verankerungsmasse in einem die Ankerstange 2 im Ankerloch umgebenden Ringspalt in Richtung der Mündung des Ankerlochs fließt. Eine Drehung der Ankerstange 2 im Ankerloch verteilt die Verankerungsmasse im Ringspalt um die Ankerstange 2 in einer Umfangsrichtung. Sofern die Verankerungsmasse zwei oder mehr Komponenten aufweist, werden die Komponenten durch die Drehung der Ankerstange 2 im Ankerloch gemischt und härten aus. Weist die Verankerungsmasse nur eine Komponente auf, härtet sie nach der Zerstörung der Verankerungspatrone 3 aus.

Die Verankerungsmasse, die durch das axiale Einbringen der Ankerstange 2 in das Ankerloch der Ankerstange 2 vom Lochgrund des Ankerlochs bis zur Mündung des Ankerlochs verteilt und durch die Drehung der Ankerstange 2 in dem die Ankerstange 2 im Ankerloch umgebenden Ringspalt in der Umfangsrichtung um die Ankerstange 2 verteilt worden ist, verankert die Ankerstange 2 im Ankerloch. Die Ankerstange 2 steht aus dem Ankerloch im Ankergrund vor derart, dass ein nicht dargestellter Befestigungsgegenstand an der Ankerstange 2 und über die Ankerstange 2 am Ankergrund befestigt werden kann.

Beim axialen Durchdringen des inneren Widerlagers 15 drückt die Ankerstange 2 die beiden Halbrohre 8 des Verbindungselements 4 radial auseinander derart, dass eine oder beide Solltrennstellen 12 zerstört werden. Die beiden dadurch voneinander getrennten Halbrohre 8 fallen herunter oder können auf der Ankerstange 2 hängen bleiben, wenn die Ankerstange 2 horizontal vom Ankergrund absteht und nur eine der beiden Solltrennstellen 12 zerstört worden ist.

Nach dem Lösen des Setzwerkzeugs 6 und dem Aushärten der Verankerungsmasse ist die chemische Verankerung erstellt.

### Bezugszeichenliste

- 1: Anordnung
- 2: Ankerstange
- 3: Verankerungspatrone
- 4: Verbindungselement
- 5: Längsachse
- 6: Setzwerkzeug
- 7: Schaft
- 8: Halbrohr
- 9: erste Aufnahme
- 10: zweite Aufnahme
- 11: Klemmelement
- 12: Solltrennstelle
- 13: Gelenk
- 14: Klemmwippe
- 15: inneres Widerlager
- 16: Stützfuß
- 17: äußeres Widerlager
- 18: Magazin
- 19: Aufnahme

## Patentansprüche

1. Anordnung (1) zur Erstellung einer chemischen Verankerung, mit einer Ankerstange (2), einer Verankerungspatrone (3), die eine Verankerungsmasse enthält, die zur Erstellung der chemischen Verankerung nach einer Zerstörung der Verankerungspatrone (3) aushärtet, und einem Verbindungselement (4), das die Verankerungspatrone (3) mit der Ankerstange (2) verbindet, wobei das Verbindungselement (4) eine erste Aufnahme (9), in der die Verankerungspatrone (3) gehalten ist, und eine zweite Aufnahme (10), in der die Ankerstange (2) gehalten ist, aufweist, **dadurch gekennzeichnet, dass** das Verbindungselement (4) zueinander bewegliche Klemmelemente (11) aufweist, zwischen denen die Verankerungspatrone (3) und die Ankerstange (2) zu ihrer Verbindung festgeklemmt sind.

2. Anordnung (1) nach Anspruch 1, **dadurch gekennzeichnet, dass** das Verbindungselement (4) zangenartig ausgebildet ist, derart, dass eine Aufweitung der ersten Aufnahme (9) die zweite Aufnahme (10) verengt und umgekehrt.

3. Anordnung (1) nach Anspruch 1 oder 2, **dadurch gekennzeichnet, dass** das Verbindungselement (4) Klemmwippen (14) aufweist, die einander gegenüber oder über einen Umfang des Verbindungselements (4) verteilt angeordnet sind und sich in einer Längsrichtung und über Teilumfänge des Verbindungselements (4) erstrecken, dass in einer Längsrichtung des Verbindungselements (4) von einer Seite die Verankerungspatrone (3) und von einer gegenüberliegenden Seite die Ankerstange (2) zwischen die Klemmwippen (14) gesteckt ist, und dass die Klemmwippen (14) gegeneinander schwenkbar sind derart, dass ein Ende der Klemmwippen (14) zusammengedrückt wird, wenn das gegenüberliegende Ende der Klemmwippen (14) auseinander gedrückt wird.

4. Anordnung (1) nach Anspruch 3, **dadurch gekennzeichnet, dass** die Klemmwippen (14) rohrschalenförmig sind.

5. Anordnung (1) nach einem oder mehreren der Ansprüche 1, 3 oder 4 **dadurch gekennzeichnet, dass** die Klemmelemente (11) oder Klemmwippen (14) durch Solltrennstellen (12) verbunden sind.

6. Anordnung (1) nach Anspruch 5, **dadurch gekennzeichnet, dass** die Solltrennstellen (12) die Klemmelemente (11) oder Klemmwippen (14) schwenkbar verbinden.

7. Anordnung (1) nach einem oder mehreren der vorhergehenden Ansprüche, **dadurch gekennzeichnet, dass** das Verbindungselement (4) ein inneres axiales Widerlager (15) für die Ankerstange (2) aufweist, wobei ein axiales Durchdringen der Ankerstange (2) durch das innere axiale Widerlager (15) das Verbindungselement (4) zerstört derart, dass der Halt der Ankerstange (2) und der Verankerungspatrone (3) im Verbindungselement (4) gelöst wird.

8. Anordnung (1) nach einem oder mehreren der vorhergehenden Ansprüche, **dadurch gekennzeichnet, dass** das Verbindungselement (4) Stützfüße (16) zu einem axialen Abstützen des Verbindungselements (4) radial außerhalb einer axialen Projektion der ersten Aufnahme (9) aufweist, die in der Längsrichtung des Verbindungselements (4) über die erste Aufnahme (9) überstehen.

9. Anordnung (1) nach einem oder mehreren der vorhergehenden Ansprüche, **dadurch gekennzeichnet, dass** das Verbindungselement (4) ein äußeres axiales Widerlager (17) zur Magazinierung im Bereich der zweiten Aufnahme (10) oder an einem der ersten Aufnahme (9) fernen Ende des Verbindungselements (4) aufweist.

10. Kombination einer Anordnung nach Anspruch 9 und einem Magazin (18), **dadurch gekennzeichnet, dass** die Anordnung (1) in einem Magazin (18) aufgenommen ist derart, dass die Ankerstange (2) aus dem Magazin (18) vorsteht.

11. Verfahren zur Erstellung einer chemischen Verankerung, umfassend Bereitstellen einer Anordnung nach einem oder mehreren der Ansprüche 1 bis 9, wobei die Verankerungspatrone (3) in der ersten Aufnahme (9) und die Ankerstange (2) in der zweiten Aufnahme (10) des Verbindungselements (4) angeordnet werden, dass die Verankerungspatrone (3) durch Bewegen der Ankerstange (2) in ein Ankerloch in einem Ankergrund eingebracht wird, dass die Ankerstange (2) durch das Verbindungselement (4) und durch die erste Aufnahme (9) hindurch in das Ankerloch eingebracht und die Verankerungspatrone (3) mit der Ankerstange (2) im Ankerloch zerstört wird.

12. Verfahren nach Anspruch 11, **dadurch gekennzeichnet, dass** die Ankerstange (2) so tief in das Ankerloch eingebracht wird, dass sie die Verankerungsmasse aus der zerstörten Verankerungspatrone (3) im Ankerloch in einen Ringspalt zwischen der Ankerstange (2) und einer Lochwand des Ankerlochs bis zu einer Mündung des Ankerlochs verdrängt.

13. Verfahren nach Anspruch 11 oder 12, **dadurch gekennzeichnet, dass** die Ankerstange (2) im Ankerloch gedreht wird, um die Ankermasse aus der zerstörten Verankerungspatrone (3) im Ankerloch in einer Umfangsrichtung um die Ankerstange (2) herum zu verteilen.

14. Verfahren nach einem oder mehreren der Ansprüche 11 bis 13, **dadurch gekennzeichnet, dass** das Verbindungselement (4) Stützfüße (16) radial außerhalb der ersten Aufnahme (9) für die Verankerungspatrone (3) aufweist, die sich beim Einbringen der Verankerungspatrone (3) in das Ankerloch außerhalb der Mündung des Ankerlochs am Ankergrund abstützen und das Verbindungselement (4) außerhalb des Ankergrunds halten.

## Claims

1. Arrangement (1) for creating a chemical anchoring system, comprising an anchor rod (2), an anchoring cartridge (3) containing an anchoring compound that cures to form the chemical anchoring system after the anchoring cartridge (3) is destroyed, and a connecting element (4), which connects the anchoring cartridge (3) to the anchor rod (2), wherein the connecting element (4) comprises a first receptacle (9), in which the anchoring cartridge (3) is held, and a second receptacle (10), in which the anchor rod (2) is held, **characterized in that** the connecting element (4) comprises clamping elements (11) that can move relative to one another, between which the anchoring cartridge (3) and the anchor rod (2) are clamped together to connect them.

2. Arrangement (1) according to claim 1, **characterized in that** the connecting element (4) is designed in the form of pliers such that widening the first receptacle (9) constricts the second receptacle (10) and vice versa.

3. An arrangement (1) according to claim 1 or 2, **characterized in that** the connecting element (4) comprises clamping rockers (14) that are arranged opposite one another or distributed around the circumference of the connecting element (4) and extend in a longitudinal direction and over partial circumferences of the connecting element (4), such that, in a longitudinal direction of the connecting element (4), the anchoring cartridge (3) is inserted between the clamping rockers (14) from one side, and the anchor rod (2) is inserted between the clamping rockers (14) from an opposite side, and that the clamping rockers (14) are pivotable relative to one another such that one end of the clamping rockers (14) is pressed together when the opposite end of the clamping rockers (14) is pushed apart.

4. Arrangement (1) according to claim 3, **characterized in that** the clamping rockers (14) are tubular.

5. An arrangement (1) according to one or more of claims 1, 3, or 4, **characterized in that** the clamping elements (11) or clamping rockers (14) are connected by predetermined breaking points (12).

6. An arrangement (1) according to claim 5, **characterized in that** the predetermined breaking points (12) are pivotable and connect the clamping elements (11) or clamping rockers (14).

7. An arrangement (1) according to one or more of the preceding claims, **characterized in that** the connecting element (4) comprises an inner axial abutment (15) for the anchor rod (2), wherein the anchor rod (2) axially penetrates through the inner axial abutment (15) to destroy the connecting element (4) such that the anchor rod (2) and the anchoring cartridge (3) in the connecting element (4) is released.

8. Arrangement (1) according to one or more of the preceding claims, **characterized in that** the connecting element (4) comprises support feet (16) for axially supporting the connecting element (4) radially outside an axial projection of the first receptacle (9), which project beyond the first receptacle (9) in the longitudinal direction of the connecting element (4).

9. An arrangement (1) according to one or more of the preceding claims, **characterized in that** the connecting element (4) comprises an outer axial abutment (17) for storage in the region of the second receptacle (10) or at an end of the connecting element (4) remote from the first receptacle (9).

10. A combination of an arrangement according to claim 9 and a magazine (18), **characterized in that** the arrangement (1) is housed in a magazine (18) such that the anchor rod (2) protrudes from the magazine (18).

11. A method for creating a chemical anchoring arrangement, comprising providing an arrangement according to one or more of claims 1 through 9, wherein the anchoring cartridge (3) is positioned in the first receptacle (9) and the anchor rod (2) is arranged in the second receptacle (10) of the connecting element (4), that the anchoring cartridge (3) is inserted into an anchor hole in a substrate by moving the anchor rod (2), that the anchor rod (2) is passed through the connecting element (4) and through the first receptacle (9) into the anchor hole, and the anchoring cartridge (3) is destroyed together with the anchor rod (2) inside the anchor hole.

12. A method according to claim 11, **characterized in that** the anchor rod (2) is inserted into the anchor hole to such a depth that it displaces the anchoring compound from the destroyed anchoring cartridge (3) in the anchor hole into an annular gap between the anchor rod (2) and a hole wall of the anchor hole, all the way to the mouth of the anchor hole.

13. A method according to claim 11 or 12, **characterized in that** the anchor rod (2) is rotated within the anchor hole to distribute the anchor compound from the destroyed anchoring cartridge (3) in the anchor hole in a circumferential direction around the anchor rod (2).

14. A method according to one or more of claims 11 through 13, **characterized in that** the connecting element (4) comprises support feet (16) located radially outside the first receptacle (9) for the anchoring cartridge (3), which, when the anchoring cartridge (3) is inserted into the anchor hole, bear against the bottom of the anchor hole outside the mouth of the anchor hole and hold the connecting element (4) outside the bottom of the substrate.

## Revendications

1. Ensemble (1) destiné à la réalisation d'un ancrage chimique, comprenant une tige d'ancrage (2), une cartouche d'ancrage (3) contenant une masse d'ancrage qui durcit pour réaliser l'ancrage chimique après la destruction de la cartouche d'ancrage (3), et un élément de liaison (4), qui relie la cartouche d'ancrage (3) à la tige d'ancrage (2), l'élément de liaison (4) comportant un premier logement (9), dans lequel est maintenue la cartouche d'ancrage (3), et un second logement (10), dans lequel est maintenue la tige d'ancrage (2), **caractérisé en ce que** l'élément de liaison (4) comporte des éléments de serrage (11) mobiles les uns par rapport aux autres, entre lesquels la cartouche d'ancrage (3) et la tige d'ancrage (2) sont serrées pour assurer leur liaison.

2. Ensemble (1) selon la revendication 1, **caractérisé en ce que** l'élément de liaison (4) est conçu à la manière d'une pince, de telle sorte qu'un élargissement du premier logement (9) rétrécit le second logement (10) et inversement.

3. Ensemble (1) selon la revendication 1 ou 2, **caractérisé en ce que** l'élément de liaison (4) comporte des leviers de serrage (14) qui sont disposés en vis-à-vis ou répartis sur une circonférence de l'élément de liaison (4) et s'étendent dans une direction longitudinale et sur des parties de la circonférence de l'élément de liaison (4), de telle sorte que, dans une direction longitudinale de l'élément de liaison (4), la cartouche d'ancrage (3) et, d'un côté opposé, la tige d'ancrage (2) sont insérées entre les leviers de serrage (14), et **en ce que** les leviers de serrage (14) sont pivotants de telle sorte qu'une extrémité des leviers de serrage (14) soit comprimée lorsque l'extrémité opposée des leviers de serrage (14) est écartée.

4. Ensemble (1) selon la revendication 3, **caractérisé en ce que** les leviers de serrage (14) ont la forme de coques tubulaires.

5. Ensemble (1) selon l'une ou plusieurs des revendications 1, 3 ou 4, **caractérisé en ce que** les éléments de serrage (11) ou les leviers de serrage (14) sont reliés par des zones de rupture prédéterminées (12).

6. Ensemble (1) selon la revendication 5, **caractérisé en ce que** les zones de rupture prédéterminées (12) relient de manière pivotante les éléments de serrage (11) ou les leviers de serrage (14).

7. Ensemble (1) selon l'une ou plusieurs des revendications précédentes, **caractérisé en ce que** l'élément de liaison (4) comporte une butée interne axiale (15) pour la tige d'ancrage (2), une pénétration axialement traversante de la tige d'ancrage (2) à travers la butée interne axiale (15) détruisant l'élément de liaison (4) de telle sorte que la retenue de la tige d'ancrage (2) et de la cartouche d'ancrage (3) dans l'élément de liaison (4) est rompu.

8. Ensemble (1) selon l'une ou plusieurs des revendications précédentes, **caractérisé en ce que** l'élément de liaison (4) comporte des pieds d'appui (16) destinés à assurer un appui axial de l'élément de liaison (4), situés radialement à l'extérieur d'une projection axiale du premier logement (9) et faisant saillie dans la direction longitudinale de l'élément de liaison (4) au-delà du premier logement (9).

9. Ensemble (1) selon l'une ou plusieurs des revendications précédentes, **caractérisé en ce que** l'élément de liaison (4) comporte une butée externe axiale (17) destinée à permettre son rangement dans la zone du second logement (10) ou à une extrémité de l'élément de liaison (4) éloignée du premier logement (9).

10. Combinaison d'un ensemble selon la revendication 9 et d'un magasin (18), **caractérisée en ce que** l'ensemble (1) est logé dans un magasin (18) de telle sorte que la tige d'ancrage (2) dépasse du magasin (18).

11. Procédé de réalisation d'un ancrage chimique, comprenant la mise à disposition d'un ensemble selon l'une ou plusieurs des revendications 1 à 9, dans lequel la cartouche d'ancrage (3) est placée dans le premier logement (9) et la tige d'ancrage (2) dans le second logement (10) de l'élément de liaison (4), dans l'ensemble de telle sorte que la cartouche d'ancrage (3) soit introduite dans un trou d'ancrage pratiqué dans un support d'ancrage par déplacement de la tige d'ancrage (2), que la tige d'ancrage (2) soit introduite à travers l'élément de liaison (4) et à travers le premier logement (9) dans le trou d'ancrage, et que la cartouche d'ancrage (3) soit détruite avec la tige d'ancrage (2) dans le trou d'ancrage.

12. Procédé selon la revendication 11, **caractérisé en ce que** la tige d'ancrage (2) est introduite à une profondeur suffisante dans le trou d'ancrage pour déplacer la masse d'ancrage provenant de la cartouche d'ancrage (3) détruite dans le trou d'ancrage vers un espace annulaire situé entre la tige d'ancrage (2) et une paroi du trou d'ancrage, jusqu'à l'embouchure de ce dernier.

13. Procédé selon la revendication 11 ou 12, **caractérisé en ce que** la tige d'ancrage (2) est tournée dans le trou d'ancrage afin de répartir la masse d'ancrage provenant de la cartouche d'ancrage (3) détruite dans le trou d'ancrage dans une direction circonférentielle autour de la tige d'ancrage (2).

14. Procédé selon une ou plusieurs des revendications 11 à 13, **caractérisé en ce que** l'élément de liaison (4) comporte des pieds d'appui (16) situés radialement à l'extérieur du premier logement (9) destiné à la cartouche d'ancrage (3), lesquels, lors de l'insertion de la cartouche d'ancrage (3) dans le trou d'ancrage, s'appuient sur le support du trou d'ancrage à l'extérieur de l'embouchure de celui-ci et maintiennent l'élément de liaison (4) à l'extérieur du support du trou d'ancrage.
